# EUROPEAN PATENT SPECIFICATION

(11) **EP 4 314 109 B1**
(45) Date of publication and mention of the grant of the patent: **11.11.2026**
(21) Application number: 22714456.5
(22) Date of filing: 23.03.2022
(51) Int. Cl.: C08G 63/47, C08G 63/553, C08G 63/91, C09D 167/06, C09D 167/08, C09J 167/06, C09J 167/08

(54) **COATINGS, ADHESIVES AND ELASTOMERS UTILISING ACETOACETATE END-CAPPED POLYOL**
BESCHICHTUNGEN, KLEBSTOFFE UND ELASTOMERE AUS EINEM MIT ACETOACETAT ENDVERKAPPTEN POLYOL
REVÊTEMENTS, ADHÉSIFS ET ÉLASTOMÈRES UTILISANT UN POLYOL COIFFÉ PAR EXTRÉMITÉ ACÉTOACÉTATE

(30) Priority: 24.03.2021 GB 202104081
(43) Date of publication of application: 07.02.2024
(73) Proprietor: Cargill Bioindustrial UK Limited, London EC4R 9AT (GB)
(72) Inventor: HONCOOP, Wilhelmus Adrianus Jacobus, Goole Yorkshire DN14 9AA (GB)
(74) Representative: Isarpatent
(86) International application number: PCT/EP2022/057573
(87) International publication number: WO 2022/200400

(56) References cited:
- WO-A1-2020/123279
- WO-A2-2008/067967

## Description

The present invention relates to an acetoacetate end-capped polyol, a polymer comprising the end capped polyol and the uses of such end-capped polyol containing materials. The invention also relates to methods of making a polymer composition comprising the acetoacetate end-capped polyol. In particular, the method of making the polymer composition may advantageously utilise a C-Michael addition reaction, the use of which is facilitated by the composition of the end-capped polyol.

WO 2020/123279 A1 discloses a method of providing an unsaturated acetoacetate end- capped polyester polyol.

WO 2008/067967 A2 discloses unsaturated polyester polyols comprising at least one dimer fatty residue selected from a dimer fatty acid residue and a dimer fatty diol residue.

The acetoacetate end-capped polyol of the present invention may be used in making alternatives to polyurethanes prepared from free isocyanates. Polyurethanes are extremely versatile materials and have been used in a wide variety of applications such as foam insulation, car seats, paint coatings, adhesives, sealants, tubing and cabling, elastomers, and abrasion resistant coatings. Polyurethanes may be used in protective coatings (e.g. applied to wood, metal, or plastic), in adhesives for rigid substrates (e.g. composites, metal), in adhesives for flexible substrates (textile, plastic film), in applications that require moisture-resistance (e.g. in products for outdoor use, or for product sealing e.g. in electronic devices), and in tough and wear-resistant elastomers.

Polyurethanes are also used in a wide variety of forms, for example non-cellular materials such as elastomers, and cellular materials such as low density flexible foams, high density flexible foams, and microcellular foams.

Polyurethanes, both in dispersion and non-dispersion forms, are also known to find use in adhesives, for example in hotmelt adhesives, moisture-cured adhesives and 2 component reactive adhesives. Such adhesives find use in, for example, the furniture industry.

Polyurethanes, both in cast thermoset and thermoplastic forms, are known to find use in composites. For example, a polyurethane may be used as a pre-matrix, fibre impregnating resin, and as binder resin of composites reinforced with fibres such as carbon, glass or polyester.

Polyurethane elastomers may be used in cabling, tubing, belting, sportswear (e.g. sports shoes, goggles, ski boots), films/sheets, automotive interiors (e.g. grips, armrests, consoles) and many other applications.

Typically, a polyurethane resin (and then subsequently the corresponding cured polyurethane polymer matrix product) may be made by reacting an isocyanate with a polyol. Although such polyurethanes prepared from isocyanates have their merits, they pose limitations when considering safety, environmental and health factors associated with use and handling of isocyanate. Toxicological profiles of monomeric isocyanates in the polyisocyanate hardeners present in such polyurethanes have come under recent scrutiny, and changes driven by legislation has led the polyurethane manufacturing industry to search for new polymer resins and matrixes, particularly ones which do not require the presence of isocyanate, but where the performance of the polymer for its intended end use is not compromised. As such, new technologies are sought to produce polymers which provide beneficial polyurethane mechanical and chemical properties, but without using isocyanates. Such new technologies would be considered more sustainable.

Michael addition (or Michael reaction) chemistry is believed to offer an alternative sustainable process by which useful polymers could be prepared in the absence of isocyanate . Michael addition chemistry has been researched and used in some applications (Noomen, A., Prog.Org.Coat, 32, 137-142(1997)).

The key chemical components of a Michael addition system are electron deficient C=C double bonds, acidic C-H bond, and a base catalyst strong enough to abstract the proton of this C-H bond which provides a nucleophilic carbanion that can add to the C=C double bond. A carbon-carbon link is thus formed between the two molecules via reaction of the nucleophilic carbanion provided. The second proton of the donor molecule is available for a similar, subsequent, reaction.

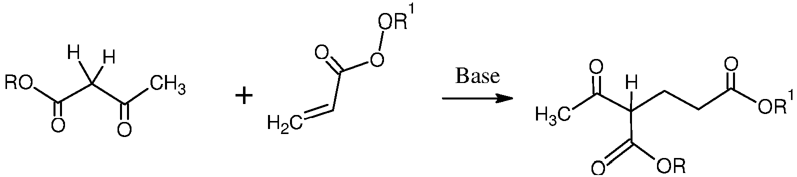

### Figure 1

The present invention seeks to provide an improved polyol which may find utility in a polymer composition so that the problems associated with isocyanate derived polyurethanes can be overcome.

Accordingly, the present invention provides an acetoacetate end-capped polyester polyol comprising,
a) at least one dimer fatty residue selected from a dimer fatty acid residue, a dimer fatty diol residue and a dimer fatty diamine residue: and optionally
b) at least one residue of a linear or branched C2 to C36 diacid or diol.

In an alternative embodiment, the present invention provides a polymer composition comprising said acetoacetate end-capped polyester polyol.

Furthermore, there is provided a method of making a polymer composition comprising reacting said acetoacetate end-capped polyol with an acrylate to form:
(i) a polymer resin; or
(ii) a polymer matrix.

The present invention further provides the use of an acetoacetate endcapped polyester polyol of the first aspect to form a polymer composition.

Additionally, the present invention provides a coating comprising said acetoacetate end- capped polyester polyol or said polymer composition comprising said acetoacetate end- capped polyester polyol.

It will be understood that any upper or lower quantity or range limit stated herein may be independently combined.

It will be understood by the skilled person that, when describing the number of carbon atoms in a substituent group (e.g. 'C1 to C6'), the number refers to the total number of carbon atoms present in the substituent group, including any present in any branched groups. Additionally, when describing the number of carbon atoms in, for example fatty acids, this refers to the total number of carbon atoms including the one at the carboxylic acid, and any present in any branch groups.

Many of the chemicals which may be used to produce the polyester polyol or polymer composition of the present invention are obtained from natural sources. Such chemicals typically include a mixture of chemical species due to their natural origin. Due to the presence of such mixtures, various parameters defined herein can be an average value and may be non-integral.

The term 'polyol' is well known in the art and refers to a molecule comprising more than one hydroxyl group.

The term 'polyester' as used herein refers to a molecule or group with more than one ester bond.

The term 'dimer fatty residue' as used herein, unless otherwise defined, refers to a residue of a dimer fatty acid (also referred to as a dimer fatty diacid) or a residue of a dimer fatty acid derivative such as a dimer fatty diol or a dimer fatty diamine.

The term 'functionality' as used herein with regard to a molecule or part of a molecule refers to the number of functional groups in that molecule or part of a molecule. A 'functional group' refers to a group in a molecule which may take part in a chemical reaction. For example, a carboxylic acid group, a hydroxyl group and an amine group are all examples of functional groups. For example, a diacid (with two carboxylic acid groups) and a diol (with two hydroxyl groups) both have a functionality of 2 and a triacid and triol both have a functionality of 3.

The term 'dimer fatty acid' (also referred to as dimer fatty diacid) is well known in the art and refers to the dimerisation products of mono- or polyunsaturated fatty acids and/or esters thereof. The related term trimer fatty acid similarly refers to trimerisation products of mono- or polyunsaturated fatty acids and/or esters thereof.

The acetoacetate end-capped polyester polyol of the present invention comprises:
a) at least one dimer fatty residue selected from a dimer fatty acid residue, a dimer fatty diol residue and a dimer fatty diamine residue; and optionally
b) at least one residue of a linear or branched C2 to C36 diacid or diol.

The acetoacetate end-capped polyester polyol can be considered to comprise a minimum of two components, one being the acetoacetate end-cap component and the other being at least a) as defined above. Preferably, the acetoacetate end-capped polyester polyol comprises three components, one being the acetoacetate end-cap component and the other two being a) and b) as defined above.

The acetoacetate end-capped polyester polyol may comprise at least 2 ester bonds, preferably at least 3 ester bonds, more preferably at least 4 ester bonds, even more preferably at least 5 ester bonds.

The acetoacetate end-capped polyester polyol may comprise at most 10 ester bonds, preferably at most 8 ester bonds, more preferably at most 7 ester bonds.

The acetoacetate end-capped polyester polyol may comprise at least one ether bond. As such, the acetoacetate end-capped polyester polyol may be a polyester ether. Alternatively, the acetoacetate end-capped polyester polyol may not comprise an ether bond.

In a less preferred embodiment the acetoacetate end-capped polyester polyol may comprise at least one amide bond. Alternatively, the acetoacetate end-capped polyester polyol may not comprise an amide bond. As such, in a less preferred embodiment the acetoacetate end- capped polyester polyol may be a polyester amide. Alternatively, the acetoacetate end- capped polyester polyol may not be a polyester amide.

Preferably the acetoacetate end-capped polyester polyol prior to end-capping has a hydroxyl functionality of at least 2, and more preferably a functionality of at most 4. One or more of these functional groups may be end capped by the acetoacetate, preferably all of the hydroxyl functional groups present in the polyol prior to end capping are end capped, although the retention of some amount of hydroxy functionality may be advantageous for some applications and uses.

Suitably, prior to end capping the polyol may be a diol, triol, tetrol, pentol or hexol. Preferably the polyol is a diol, triol or tetrol, more preferably a diol or triol. Most preferably, prior to end capping the polyol is a diol.

The polyol prior to end capping preferably has a hydroxyl value (measured as described herein) in the range from 10 to 100, more preferably 30 to 90, particularly preferably 40 to 70, and especially preferably 50 to 60 mgKOH/g.

In addition, the polyol prior to end capping preferably has an acid value (measured as described herein) of less than 2, more preferably less than 1.7, particularly preferably less than 1.3, and especially preferably less than 1.0 mgKOH/g.

The acetoacetate end-capped polyester polyol may have a molecular weight (number average) of at least 500, preferably at least 800, more preferably at least 1000, even more preferably at least 1500, especially preferably at least 1800.

The acetoacetate end-capped polyol may have a molecular weight (number average) of at most 5000, preferably at most 4000, more preferably at most 3000, even more preferably at most 2500, especially preferably at most 2200.

The acetoacetate end-cap component of the acetoacetate end-capped polyol may be selected from one or more of the following: methyl acetoacetate, ethyl acetoacetate, tert-butyl acetoacetate, isopropyl acetoacetate, and isobutyl acetoacetate. Preferably the acetoacetate end-cap is tert-butyl acetoacetate.

The acetoacetate end-capped polyester polyol may comprise at least 10 wt% acetoacetate end-cap, preferably at least 40 wt%, more preferably 50 wt%, of the total weight of the polyester polyol. The acetoacetate end-capped polyol may comprise at most 100 wt% acetoacetate end-cap, preferably 90 wt%, and more preferably at most 90 wt%, of the total weight of the polyester polyol.

Suitably, the weight ratio of a) to b) in the polyester polyol may be in the range 100:0 to 30:70, preferably in the range 85:15 to 45:55. The weight % of a) in the acetoacetate end- capped polyester polyol may be at least the weight % of b).These relative amounts of a) and b) in the acetoacetate end-capped polyester polyol may provide an advantageous balance of flexibility, tensile strength, hardness, and hydrolysis resistance in a polymer matrix formed from the polyester polyol, as further described below.

The component,
a) at least one dimer fatty residue selected from a dimer fatty acid residue, a dimer fatty diol residue and a dimer fatty diamine residue,
of the acetoacetate end-capped polyester polyol, will now be described in more detail.

Generally, the at least one dimer fatty residue may include any of the features or preferences described herein with regard to dimer fatty acids, dimer fatty diols or dimer fatty diamines as detailed below.

Suitably, the at least one dimer fatty residue may be saturated or unsaturated. However, preferably the at least one dimer fatty residue is saturated.

The dimer fatty residue is fatty in nature and this may increase the hydrophobicity of the polyol. The presence of the dimer fatty residue may render the polyol more amorphous, non-crystalline or substantially non-crystalline. The amorphous nature of the polyol may increase the flexibility and/or decrease the tensile strength of a polymer matrix comprising the polyol, as further described below.

The acetoacetate end-capped polyester polyol may comprise at least 5wt% dimer fatty residue, preferably at least 10wt%. The acetoacetate end-capped polyester polyol may comprise at most 90wt% dimer fatty residue, preferably 85wt% dimer fatty residue, and more preferably at most 80wt%.

The at least one dimer fatty residue selected may be a dimer fatty acid residue.

Suitably, the acetoacetate end-capped polyester polyol may comprise at least 5wt% dimer fatty acid residue, preferably at least 10wt%. The acetoacetate end-capped polyester polyol may comprise at most 30wt% dimer fatty acid residue, preferably at most 20wt%.

Dimer fatty acids are described in T. E. Breuer, 'Dimer Acids', in J. I. Kroschwitz (ed.), Kirk-Othmer Encyclopaedia of Chemical Technology, 4th Ed., Wily, New York, 1993, Vol. 8, pp. 223-237. They are prepared by polymerising fatty acids under pressure, and then removing most of the unreacted fatty acid starting materials by distillation. The final product usually contains some small amounts of mono fatty acid and trimer fatty acids but is mostly made up of dimer fatty acids. The resultant product can be prepared with various proportions of the different fatty acids as desired.

The ratio of dimer fatty acids to trimer fatty acids can be varied, as is known to the person skilled in the art, by modifying the processing conditions and/or the unsaturated fatty acid feedstock. The dimer fatty acid may be isolated in substantially pure form from the product mixture, using purification techniques known in the art, or alternatively a mixture of dimer fatty acid and trimer fatty acid may be employed.

The dimer fatty acids or dimer fatty residues used in the present invention are preferably derived from the dimerisation products of C10 to C30 fatty acids, more preferably C12 to C24 fatty acids, particularly C14 to C22 fatty acids, further preferably C16 to C20 fatty acids, and especially C18 fatty acids. Thus, the resulting dimer fatty acids preferably comprise in the range from 20 to 60, more preferably 24 to 48, particularly 28 to 44, further preferably 32 to 40, and especially 36 carbon atoms.

Suitably, the fatty acids, from which the dimer fatty acids are derived, may be selected from linear or branched unsaturated fatty acids, and linear fatty acids are preferred. The unsaturated fatty acids may be selected from fatty acids having either a cis/trans configuration and may have one or more than one unsaturated double bond. However, monounsaturated fatty acids are particularly preferred. Most preferably, the fatty acids are linear monounsaturated fatty acids.

Suitably, the dimer fatty acids may be non-hydrogenated, hydrogenated, or partially hydrogenated. A hydrogenated dimer fatty residue (whether from a diacid, diol or diamine) may have better oxidative or thermal stability which may be desirable in a polymer comprising the polyol, as such preferably the dimer fatty acid is hydrogenated or partially hydrogenated.

Suitable dimer fatty acids are preferably derived from (i.e. are the dimer equivalents of) the dimerisation products of oleic acid, linoleic acid, linolenic acid, palmitoleic acid, or elaidic acid. In particular, suitable dimer fatty acids are preferably derived from oleic acid.

The dimer fatty acids may be dimerisation products of unsaturated fatty acid mixtures obtained from the hydrolysis of natural fats and oils, e.g. sunflower oil, soybean oil, olive oil, rapeseed oil, cottonseed oil, or tall oil.

The molecular weight (weight average) of the dimer fatty acid is preferably in the range from 450 to 690 (g/mol), more preferably 500 to 640 (g/mol), particularly 530 to 610 (g/mol), and especially 550 to 590 (g/mol).

Furthermore, in addition to the dimer fatty acids, dimerisation usually results in varying amounts of trimer fatty acids (so-called "trimer"), oligomeric fatty acids, and residues of monomeric fatty acids (so-called "monomer"), or esters thereof, being present. The amount of monomer can, for example, be reduced by distillation. Since distillation of the dimer fatty acid product will increase production costs the presence of these optional dimerisation reaction products is tolerated, however, purification by distillation of the dimer fatty acid may be preferred for some niche applications.

Suitably, the trimer fatty acids are preferably derived from the trimerisation products of the materials mentioned with regard to the dimer fatty acids, and are preferably trimers of C10 to C30, more preferably C12 to C24, particularly C14 to C22, further preferably C16 to C20 fatty acids, and especially C18 fatty acids. Thus, the trimer fatty acids preferably contain in the range from 30 to 90, more preferably 36 to 72, particularly 42 to 66, further preferably 48 to 60, and especially 54 carbon atoms.

The molecular weight (weight average) of the trimer fatty acids is preferably in the range from 750 to 950 (g/mol), more preferably 790 to 910 (g/mol), particularly 810 to 890 (g/mol), and especially 830 to 870 (g/mol).

Additionally, or alternatively, tetramer fatty acids and higher oligomers (hereinafter both referred to as oligomeric acids) may be formed during production of the dimer fatty acid. Such oligomeric acids may therefore also be present in the dimer fatty acids used in the present invention, in combination with trimer fatty acids and/or dimer fatty acids and/or mono fatty monoacids, as alluded to above.

The oligomeric acids are preferably oligomers, containing 4 or more units derived from C10 to C30, more preferably C12 to C24, particularly C14 to C22, and especially C18 fatty acids. The molecular weight (weight average) of the oligomeric acid is suitably greater than 1000 (g/mol), preferably in the range from 1200 to 1800 (g/mol), more preferably 1300 to 1700 (g/mol), particularly 1400 to 1600 (g/mol), and especially 1400 to 1550 (g/mol).

The dimer fatty acid used in the present invention preferably may have a dimer fatty acid (or dimer) content of greater than 60 wt.%, more preferably greater than 70 wt.%, particularly greater than 80 wt.%, and especially greater than 85 wt.%. Most preferably, the dimer content of the dimer fatty acid is in the range from 90 wt.% to 99 wt.%.

In an alternative embodiment, the dimer fatty acid preferably has a dimer fatty acid (or dimer) content in the range from 70 wt.% to 96 wt.%. This may be applicable in particular for polymer compositions comprising said acetoacetate end-capped polyester polyol which are considered to be two component (2K) or cross-linked polymer composition systems.

Additionally, or alternatively, particularly preferred dimer fatty acids may have a trimer fatty acid (or trimer) content of less than 40 wt.%, more preferably less than 30 wt.%, particularly less than 20 wt.%, and especially less than 15 wt.%. The trimer fatty acid content may be less than 4 wt.%.

Furthermore, the dimer fatty acid preferably comprises less than 10 wt.%, more preferably less than 5 wt.%, particularly less than 4 wt.%, and especially less than 2.5 wt.% of mono fatty monoacid (or monomer).

All of the above weight percentage values are based on the total weight of the polymerised fatty acids and mono fatty acids present in the dimer fatty acid.

Additionally, or alternatively, the at least one dimer fatty residue selected may be a dimer fatty diol residue.

A suitable dimer fatty diol may be formed by hydrogenation of the corresponding dimer fatty acid. A dimer fatty acid (or dimer fatty diacid) may be converted to a dimer fatty diol as is known in the art. A dimer fatty diol may have properties as described herein with regard to a dimer fatty acid (or dimer fatty diacid) except that the acid groups in the dimer fatty acid are replaced with hydroxyl groups in the dimer fatty diol. In a similar manner, a trimer fatty triacid may be converted to a trimer fatty triol which may have properties as described herein with regard to a trimer fatty triacid. As such, the same preferred embodiments detailed herein in relation to the dimer fatty acid may apply to corresponding preferred embodiments of the dimer fatty diol residue component of the polyester polyol.

Suitably, prior to being end-capped the polyester polyol may comprise at least 50 wt% dimer fatty diol residue, preferably at least 60 wt%. The polyol may comprise at most 90 wt% dimer fatty diol residue, preferably at most 80 wt%. These amounts of dimer fatty residue may provide a suitable amount of hydrophobicity and/or amorphousness to the final polyester polyol without an excessive decrease in tensile strength or hardness of a polymer matrix comprising the polyester polyol.

Suitably, the acetoacetate end-capped polyester polyol may comprise at least 5 wt% dimer fatty diol residue, preferably at least 10 wt%, based on the total weight of the acetoacetate end-capped polyester polyol. The polyol may comprise at most 30 wt% dimer fatty diol residue, preferably at most 20 wt% based on the total weight of the acetoacetate end- capped polyester polyol.

The dimer fatty diol may be hydrogenated. The dimer fatty diol may be non-hydrogenated.

Additionally, or alternatively, the acetoacetate end-capped polyester polyol may comprise at least one dimer fatty diamine residue, such that the at least one dimer fatty residue selected may be a dimer fatty diamine residue. However, this embodiment is less preferred, and the polyol may comprise no dimer fatty diamine residue, and hence no associated amine groups in component a) of the polyester polyol.

The component,
b) at least one residue of a linear or branched C2 to C36 diacid or diol, of the acetoacetate end-capped polyester polyol,
will now be described in more detail.

Prior to being end-capped, preferably the at least one residue of a C2 to C36 diacid or diol has at least 2 functional groups selected from a carboxylic acid group, a hydroxyl group and mixtures thereof. In some embodiments, the diacid or diol preferably has only 2 functional groups selected from a carboxylic acid group, a hydroxyl group and mixtures thereof. It should be understood that these functional groups will preferably all be end-capped in the final polyester polyol product.

Suitably, prior to being end-capped the polyester polyol may comprise at least 10 wt% of component b), preferably at least 15wt%, more preferably at least 20wt% based on the total weight of the polyol. The polyol prior to being end-capped may comprise at most 50wt% of b), preferably at most 40wt%. It will be understood that the level of component b) in the end- capped polyol will be least 0.10wt%, preferably at least 0.15wt%, and more preferably at least 0.20wt%. Furthermore, it will be understood that the level of component b) in the end- capped polyol may comprise at most 15wt% dimer fatty diol residue, preferably at most 8wt%. These amounts of b) may provide a suitable amount of crystallinity to the polyol without an excessive decrease in flexibility of a polymer matrix comprising the polyol.

It should be understood that component b) is a non-dimeric diacid or diol and is distinct to the dimer fatty acid and diols described above for component a).

Suitable non-dimeric diacids may be aliphatic or aromatic (such as phthalic acid, isophthalic acid and terephthalic acid), and include dicarboxylic acids and their esters, preferably alkyl esters, thereof.

Preferably the acetoacetate end-capped polyester polyol comprises at least two residues of a linear or branched C2 to C36 diacid or diol, and in some embodiments may comprise at least three residues of a linear or branched C2 to C36 diacid or diol, each independently selected from the preferred embodiments detailed below. The inclusion of more than one type of one residue of a linear or branched C2 to C36 diacid or diol will allow the physical properties of a polymer comprising the acetoacetate end-capped polyester polyol to be tailored to its specific end use.

In one particularly preferred embodiment b) comprises at least one residue of a linear or branched C6 to C36 dicarboxylic acid or diol. The presence of b) in the polyester polyol may make the polyol more crystalline due to the long aliphatic carbon chain present in the at least one residue of a C6 to C36 linear or branched dicarboxylic acid or diol. The increased crystallinity may increase the tensile strength and/or hardness of a polymer matrix comprising the acetoacetate end-capped polyester polyol. The presence of b) in the polyester polyol may also increase the green strength of an adhesive formed from such an acetoacetate end-capped polyester polyol containing polymer. The at least one residue of a C6 to C36 linear or branched diacid may include the esters thereof, preferably alkyl esters and more preferably dimethyl esters.

The at least one residue of a C6 to C36 linear or branched dicarboxylic acid or diol may be linear. Prior to end-capping of the polyester polyol it may comprise terminal carboxyl or hydroxyl groups, wherein the terminal carboxyl or hydroxyl groups are bridged by an alkyl group, or an alkenyl group.

The at least one residue of a C6 to C36 linear or branched dicarboxylic acid or diol may be branched. The at least one residue of a C6 to C36 linear or branched diacid or diol may comprise at least one methyl branch. The at least one residue of a C6 to C36 linear or branched diacid or diol may comprise at least one ethyl branch.

The at least one residue of a C6 to C36 linear or branched dicarboxylic acid or diol may be saturated or unsaturated, preferably saturated.

Preferably the C6 to C36 dicarboxylic acid or diol is a linear dicarboxylic acid.

The C6 to C36 dicarboxylic acid or diol may preferably be a C18 to C32 dicarboxylic acid or diol, and more preferably a C18 to C26 dicarboxylic acid or diol. The C6 to C36 dicarboxylic acid or diol may preferably be a C18 dicarboxylic acid. The C6 to C36 dicarboxylic acid or diol may preferably be a C26 dicarboxylic acid.

The C6 to C36 diacid or diol may be derived from a C6 to C36 diacid or dialkyl ester which is obtained by a metathesis reaction, preferably a self-metathesis reaction. The metathesis reaction may occur in the presence of a catalyst. Suitable metathesis catalysts are disclosed in WO 2008/065187 and WO 2008/034552, and these documents are incorporated herein by reference.

Additionally, or alternatively, component b) comprises at least one residue of a linear dicarboxylic acid having a carbon chain in the range from 4 to 12 carbon atoms, such as adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, and dodecane dicarboxylic acid. More preferably, b) comprises at least one residue of a linear dicarboxylic acid having 5 to 10 carbon atoms. Adipic acid is particularly preferred. This embodiment is particularly preferred where component b) comprises at least two or more residues of said C2 to C36 diacid or diols.

Preferably, b) may comprise at least one residue of a diol having from 2 to 10 carbon atoms, more preferably from 5 to 8 carbon atoms. This embodiment is particularly preferred where component b) comprises at least two or more residues of the C2 to C36 diacid or diols.

Suitable non-dimeric diols may be independently selected from straight chain aliphatic diols or branched aliphatic diols, or a combination thereof.

Suitable non-dimeric diols include straight chain aliphatic diols such as ethylene glycol, diethylene glycol, 1,3-propylene glycol, dipropylene glycol, 1,4-butylene glycol, 1,6-hexylene glycol (also known as hexanediol) and mixtures thereof, branched diols such as neopentyl glycol, 3-methyl pentane glycol, 1,2-propylene glycol and mixtures thereof, and cyclic diols such as 1,4-bis(hydroxymethyl)cyclohexane and 1,4-cyclohexane-dimethanol and mixtures thereof. Hexanediol is particularly preferred.

Straight chain aliphatic diols may be independently selected from ethylene glycol, diethylene glycol, 1,3-propylene glycol (better known as 1,3-propanediol), 1,4-butanediol and 1,6-hexanediol. Such materials are particularly preferred.

Branched aliphatic diols may be independently selected from 1,2-propylene glycol, 1,2-butanediol, 2,3-butanediol, and 1,3-butanediol.

The component b) may comprises at least one residue of a polyether diol, for example polyethylene glycol, polypropylene glycol or polytetrahydrofuran (also known as polytetramethylene ether glycol or PTMEG). The PTMEG may have a molecular weight (number average) of from 200 to 2000, preferably from 200 to 1000, more preferably from 200 to 500. This embodiment is particularly preferred where component b) comprises at least two or more residues of the C2 to C36 diacid or diols.

Component b) may comprise at least one residue of a polyol having a hydroxyl function greater than 2. Such polyols may include glycerol, pentaerythritol, or trimethylolpropane.

The component b) is preferably derived from a renewable and/or bio-based source. The level of the renewable carbon content of b) may be determinable by ASTM D6866 as a standardised analytical method for determining the bio-based content of a sample using ¹⁴C radiocarbon dating. ASTM D6866 distinguishes carbon resulting from bio-based sources from those derived from fossil-based sources. Using this standard, a percentage of carbon from renewable sources can be calculated from the total carbon in a tested sample. Suitably, component b) may have a renewable carbon content of at least 50 wt% when determined using ASTM D6866, preferably at least 65 wt%, more preferably at least 80 wt%.

Additionally, or alternatively, the present invention provides a polymer composition comprising the acetoacetate end-capped polyester polyol as described above. Such polymer compositions may have one or more desired physical properties and be particularly suited to their intended end use.

Suitably the polymer composition may be a resin (i.e. pre-cured polymeric material, in an intermediate form) or a polymer matrix (i.e. post-cured polymeric material, in its final form). As such, the polymer composition can be considered to embrace two distinct embodiments, the first being a resin and the second being a polymer matrix. There is a large amount of overlap between the two polymer composition embodiments, since additives necessary for intended use or processing of a polymer matrix final product may be introduced during manufacture of the polymer resin for ease of post-processing or handling. As such, embodiments below which refer to the "polymer composition" apply equally to the polymer resin and polymer matrix embodiments.

The polymer composition may be provided as a resin, and subsequently the resin may be converted to a polymer matrix via curing. The difference between the polymer resin and polymer matrix, as will be appreciated by the skilled person, is that cross-linking of the polymer chains will be present in the polymer matrix. Curing to cross-link the polymer chains may be achieved by any suitable means, although preferred means will be described further below.

The dimer fatty residue content of the polymer composition is preferably in the range from 5 to 50%, more preferably 8 to 40%, particularly 12 to 30%, and especially 15 to 20% by weight.

The polymer composition is preferably derived from renewable and/or bio-based sources. The level of this may be determinable by ASTM D6866 as briefly described herein. Preferably, the polymer composition has a renewable carbon content of at least 50 % when determined using ASTM D6866. More preferably, at least 65 %. Most preferably, at least 80 %.

It is a particular advantage of the polymer composition of the present invention that it is isocyanate free. As such, the polymer composition does not contain isocyanate. The polymer composition is substantially free from isocyanate.

Preferably the polymer composition is the reaction product of the acetoacetate end capped polyester polyol described above and an acrylate. As such the polymer composition comprises said acetoacetate end-capped polyester polyol and an acrylate.

Suitably, the molar ratio of the acetoacetate end-capped polyester polyol to acrylate is in the range from between 1: 0.2 to 4, preferably from between 1 : 0.25 to 3, more preferably from between 1 : 0.25 to 2.5, and most preferably from between 1 : 0.25 to 1.8.

Suitably, the acrylate may be selected from one or more of an acrylate, a polyfunctional acrylate, an oligomeric acrylate or derivatives thereof.

Preferably the acrylate is provided by an oligomeric acrylate or derivative thereof. Particular preferred oligomeric acrylates are urethane acrylates and epoxy acrylates. Such oligomeric acrylates may preferably be oligomeric acrylates resins, as further detailed below. Commercially available oligomeric acrylate resins include Photomer^{®} from IGM Resins, Laromer^{®} from BASF, Ebecryl^{®} from Allnex, amongst others.

Preferable polyfunctional acrylates or derivatives thereof have a functionality equal to or greater than two. Suitably, the polyfunctional acrylate derivative may be selected from the group consisting of any monomeric or oligomeric molecule possessing acrylate, methacrylate, ethylacrylate, and combinations thereof.

Preferably, the acrylate derivative may be selected from the group consisting of hexafunctional urethane acrylates, dipentaerythritol pentaacrylate, ethoxylated pentaerythritol tetraacrylate, di-trimethylolpropane tetraacrylate, pentaerythritol triacrylate, trimethylolpropane triacrylate, ethoxylated trimethylolpropane triacrylate, butanediol diacrylate, tripropylene glycol diacrylate, trimethylolpropane trimethacrylate, difunctional urethane acrylates, tetraacrylate monomer, polyester acrylate oligomers, and combinations thereof.

In one particularly preferred embodiment the polyfunctional acrylate derivative is a urethane acrylate oligomer.

In an alternative particularly preferred embodiment, the acrylate is a polyfunctional acrylate oligomer selected from an oligomeric epoxy acrylate resin or oligomeric polyether acrylate resin or oligomeric polyester acrylate or combinations thereof.

The polymer composition may optionally contain one or more other additives such as blowing agents, catalysts, pigments, fillers, surfactants, and stabilisers.

The polymer composition may optionally comprise a blowing agent, which may include water, fluorocarbons such as trichlorofluoromethane, dichlorodifluoromethane and trichlorodifluoroethane, or mixtures thereof.

The polymer composition may optionally comprise a catalyst. The catalyst may be present in a polymer resin to assist in post-processing or may be present in a polymer matrix due to being immobilised in the polymer matrix during processing. Such catalysts tend to be homogeneous catalysts. A preferred homogeneous catalyst is a salt of a basic anion group. Examples of useful cations include inorganic cations, preferably alkaline or alkaline earth metal cations, more preferably K+ , Na+ and Li+ , or organic cations like tetraalkylammonium and tetra-alkylphosphonium salts, but also cations that do have a proton but are extremely non-acidic, for example protonated species of strongly basic organic bases as e.g. 1,8-Diazabicyclo[5.4.0]undec-7-ene (DBU), 1 ,5-Diazabicyclo[4.3.0] non-5-ene (DBN) or tetra-methylguanidine.

The polymer composition may optionally comprise a surfactant. Preferred surfactants may include one or more of the following, silicone surfactants such as dimethylpolysiloxane, polyoxyalkylene polyol-modified dimethylpolysiloxane and alkylene glycol-modified dimethylpolysiloxane; and/or anionic surfactants such as fatty acid salts, sulphuric acid ester salts, phosphoric acid ester salts and sulphonates.

The polymer composition may optionally comprise a stabiliser. Suitably, the stabiliser may be selected from a radical scavenger, antioxidant or ultra violet light absorbing agent. Suitable stabilisers can be selected by the skilled person dependent upon the intended end use of the polymer composition. Examples of the stabilisers include hindered phenol radical scavengers such as dibutylhydroxytoluene, pentaerythrityl-tetrakis[3-(3,5-di-t-butyl-4-hydroxyphenyl) propionate] and isooctyl-3-(3,5-di-t-butyl-4-hydroxyphenyl)propionate; antioxidants such as phosphorous acid compounds such as triphenylphosphite, triethylphosphite and triphenylphosphine; ultraviolet absorbing agents such as 2-(5-methyl-2-hydroxyphenyl)benzotriazole and a condensation product of methyl-3-[3-t-butyl-5-(2H-benzotriazole-2-yl)-4-hydroxyphenyl]propionate and polyethylene glycol.

The polymer composition may optionally comprise a pigment or dye. Suitable pigments include inorganic pigments such as transition metal salts; organic pigments such as azo compounds; and carbon powder.

The polymer composition may optionally comprise a filler. Suitable fillers include inorganic fillers such as clay, chalk, and silica.

The polymer composition may optionally comprise a chain extender component. The chain extender component may be in the form of a chain extender composition. The chain extender composition is preferably prepared by simple pre-mixing of, for example, the chain extender, an acrylate (as described above) and other additives (such as pigment and/or filler as described above). At least one acrylate oligomer may be added together with the chain extender component to react with a prepolymer in order to form the polymer composition. Advantageously, formation is via a C-Michael addition, to provide a C-Michael polymer, as further described below.

The chain extender component utilised in the polymer suitably comprises a low molecular compound having two or more active acrylic functions. Examples of such acrylic function containing compounds include the acrylate group consisting of hexafunctional urethane acrylates, dipentaerythritol pentaacrylate, ethoxylated pentaerythritol tetraacrylate, di-trimethylolpropane tetraacrylate, pentaerythritol triacrylate, trimethylolpropane triacrylate, ethoxylated trimethylolpropane triacrylate, butanediol diacrylate, tripropylene glycol diacrylate, trimethylolpropane trimethacrylate, difunctional urethane acrylates and tetraacrylate monomer.

The molar ratio of chain extender to acetoacetate end capped polyester polyol of the first aspect of the invention employed is preferably in the range from 1 to 10 :1, more preferably 1.5 to 8 :1, particularly 2 to 5 :1, and especially 2.5 to 4 :1.

The present invention also provides a method of making a polymer composition comprising said acetoacetate end-capped polyester polyol with an acrylate to form:
(i) a polymer resin; or
(ii) a polymer matrix.

The preferred features of the acetoacetate end-capped polyester polyol and the preferred features of the acrylate are as described above in relation to the composition embodiments.

Suitably, the method includes the step of forming i) a polymer resin, and then optionally, subsequently forming ii) a polymer matrix from the resin. It is envisaged that the step of forming i) the polymer resin may be performed in one geographic location, and then the subsequent step of forming ii) the polymer matrix from the polymer resin may be performed in a second geographically distinct location.

The method of making the polymer composition may comprise mixing together the acetoacetate end-capped polyol with the acrylate. This is to ensure that the two reactants are brought into intimate proximity resulting in a homogenous polymer composition.

As alluded to above, the main difference between the polymer composition resin and the polymer composition matrix, is the fact that the matrix is further processed to achieve cross-linking between the polymer chains. As such, in the method of making the polymer composition (ii) a polymer matrix the method must include the step of crosslinking the polymer chains. Methods of cross-linking polymer resins to provide polymer matrix are known in the art of polymer manufacturing and are generally referred to as methods of curing. In the present method the cross-linking of the polymer chains may be achieved by any suitable means. However, cross-linking via free radical polymerisation or cross-linking via Michael addition reaction is particularly suitable.

Preferably, the step of polymer cross-linking via free radical polymerisation or via Michael addition reaction may be achieved at ambient temperature, and more desirably at room temperature. In particular, cross-linking via free radical polymerisation or cross-linking via Michael addition reaction may advantageously be achieved at a temperature between 0° and 120°C, preferably at a temperature between 15°C and 60°C, and more preferably at a temperature between 20°C and 25°C.

More especially, cross-linking via Michael addition reaction is preferred; such materials can be referred to as Carbon-Michael reacted polymers, or C-Michael polymers for short. As such, the end-capped polyester polyol containing polymer composition matrix product formed via this particularly preferred method may conveniently be referred to as a C-Michael polymer herein.

It is a significant advantage of the present invention that the cross-linking can be achieved by carbon cross-linking by way of a Michael addition reaction. The ability to utilise the Michael addition reaction method for achieving carbon to carbon bonds is facilitated by the presence of the acetoacetate end-cap introduced to the polyester polyols as described herein. The fact that the relatively mild method of achieving the carbon-to-carbon bonds can be utilised means that polymer manufacturing methods utilising isocyanate as a reactant can be replaced but unexpectedly without the loss of product performance when the polymer matrix is utilised in its intended end use as compared to polymers prepared utilising isocyanate. Such an isocyanate free method of polymer manufacture has clear health and environmental benefits over a traditional isocyanate polymer manufacturing method. Additionally, the fact that polymer cross-linking via the Michael addition reaction may be achieved at ambient temperature and/or room temperature provides ease of manufacturing benefits.

The present invention further provides the use of an acetoacetate end-capped polyester polyol as described herein to form a polymer composition. The polymer compositions, and more especially the C-Michael polymers, as described herein may be used in many applications. The polymers of the present invention may preferably be used in coating compositions, adhesive compositions, sealant compositions, adhesive composition, or elastomer compositions. In particular, the polymers may find application in coating compositions, adhesive compositions, or sealant compositions and more preferably in coating compositions or adhesive compositions, and most preferably in coating compositions.

Additionally, the present invention provides a coating composition or sealant composition comprising the acetoacetate end-capped polyester polyol described above. More especially, the coating composition, adhesive composition, or sealant composition preferably comprise a polymer composition matrix as described herein. Advantageously, the coating composition, adhesive composition or sealant composition comprise a C-Michael polymer as described herein.

Suitably the coating compositions provided herein may be a high solid or a solid coating. The coating composition may be a pigmentated or clear coating.

All of the features described herein may be combined with any of the above aspects, in any combination.

### Examples

The present invention will now be described further by way of example only with reference to the following Examples. All parts and percentages are given by weight unless otherwise stated.

It will be understood that all tests and physical properties listed have been determined at atmospheric pressure and room temperature (i.e. about 20°C), unless otherwise stated herein, or unless otherwise stated in the referenced test methods and procedures.

Materials as used in the following examples are identified as follows:
▪ 1,6-hexanediol- ex BASF
▪ 1,4-butanediol - ex BASF
▪ Adipic acid (C₆ dicarboxylic acid) - a bio-based version as available ex Verdezyne
▪ Pripol^{™} 2033 dimer fatty diol - C₃₆ diol ex Croda (functionality 2)
▪ Pripol^{™} 2043 dimer fatty diol - C₃₆ diol ex Croda (functionality 2.2)
▪ Pripol^{™} 1006 dimer fatty diacid - a hydrogenated C₃₆ dicarboxylic acid ex Croda
▪ Pripol^{™} 1013 dimer fatty diacid - an unhydrogenated C₃₆ dicarboxylic acid ex Croda
▪ Trimethylolpropane- ex Perstorp
▪ Caprolactone - CAPA-monomer ex Perstorp
▪ Tert-butyl acetoacetate - tBAA ex Eastman
▪ PTMEG- Terathane^{™} - number average molecular weight 2000 ex Invista
▪ PPG - number average molecular weight 1000 ex Sigma-Alderich
▪ Photomer^{™} 3016- 60G - an epoxy acrylate ex IGM Resins
▪ Photomer^{™} 4335 - a acrylate ex IGM Resins
▪ Photomer^{™} 4028 - a acrylate ex IGM Resins
▪ Photomer^{™} 6210 - a acrylate ex IGM Resins

### Test methods:

▪ Number average molecular weight was determined by end group analysis with reference to the hydroxyl value.
▪ Weight average molecular weight was determined by end group analysis with reference to the hydroxyl value.
▪ The hydroxyl value is defined as the number of mg of potassium hydroxide equivalent to the hydroxyl content of 1g of sample and was measured by acetylation followed by hydrolysation of excess acetic anhydride. The acetic acid formed was subsequently titrated with an ethanolic potassium hydroxide solution.
▪ The acid value is defined as the number of mg of potassium hydroxide required to neutralise the free fatty acids in 1 g of sample and was measured by direct titration with a standard potassium hydroxide solution.
▪ Buchholz hardness was tested according to ISO 2815-2003.
▪ Impact resistance was tested according to ISO 62772-1.
▪ (vii) Chemical resistance was evaluated according to DIN12720 in which coating samples were spot tested for a predetermined time and given a rating from 5 = undamaged to 0 = complete damage.
▪ Shore A Hardness was measured according to DIN 53505.
▪ Adhesion strength was measured according to ISO 4587.

### Example 1 : Preparation and examples of acetoacetate end-capped polyester polyols

### P1- Dimer fatty acid and diol containing polyester polyol

In a reactor equipped with a stirrer, a thermometer, a gas inlet and condenser, 100 parts by weight of Pripol 1006 and 21 parts butanediol, were charged. Subsequently, the temperature of the reactor was raised from ambient temperature to 220-230°C under normal pressure under a nitrogen atmosphere. Under these conditions an esterification reaction was conducted to obtain a polyester polyol. The esterification reaction was conducted until the desired acid/hydroxyl value was observed; in this example the polyester polyol obtained had an acid value of less than 1 mg KOH/g and a hydroxyl value of 56 mg KOH/g. The polyester polyol obtained had a calculated number average molecular weight of about 2000 g/mol and an 85% renewable content and functionality of 2.

### P2- Dimer fatty acid, triol and polyol containing polyester polyol

In a reactor equipped with a stirrer, a thermometer, a gas inlet and condenser, 100 parts by weight of Pripol 1006 and 47 parts trimethylolpropane, were charged. Subsequently, the temperature of the reactor was raised from ambient temperature to 220-230°C, under normal pressure in a nitrogen atmosphere. Under these conditions an esterification reaction was conducted until the desired acid/hydroxyl value was observed. In this example the polyester polyol obtained had an acid value of less than 1 mg KOH/g and a hydroxyl value of 282 mg KOH/g. The polyester polyol obtained was retained in the reactor and was further modified by introduction of a CAPA polyol, as per the method steps below.

The temperature of the reactor was lowered to 160°C after which 60 parts of caprolactone (CAPA-monomer ex Perstorp) and 0.05 parts of tin (II) octoate as polymerisation catalyst, were charged. Under these conditions a ring opening polymerisation reaction was conducted until the desired acid/hydroxyl value were observed. The final polyester polyol obtained had an acid value of less than 1 mg KOH/g and a hydroxyl value of 210 mg KOH/g. The polyester polyol obtained had a calculated number average molecular weight of about 1000, a 55% renewable content and functionality of 4.

### P3- Dimer fatty acid and diol containing polyester polyol

In a reactor equipped with a stirrer, a thermometer, a gas inlet and condenser, 100 parts by weight of Pripol 1006 and 87 parts Hexanediol, were charged. Subsequently, the temperature of the reactor was raised from ambient temperature to 220-230°C, under normal pressure in a nitrogen atmosphere. Under these conditions an esterification reaction was conducted until the desired acid/hydroxyl value was observed. In this example the polyester polyol obtained had an acid value of less than 1 mg KOH/g and a hydroxyl value of 37 mg KOH/g. The polyester polyol obtained had a calculated number average molecular weight of about 2000 g/mol and an 83% renewable content and functionality of 2.

### General method for conversion to acetoacetate end-capped polyester polyol

Each of the polyester polyols prepared above and the Pripols 2033, Pripol 2043 and PTMEG were subsequently modified to render them acetoacetate end-capped, in accordance with the present invention.

In a reactor equipped with a stirrer, a thermometer, a gas inlet and a condenser, 100 parts by weight of each of a polyol as prepared above and 15.8 parts by weight of tert-butyl acetoacetate (Eastman^{™} t-BAA) were charged.

The temperature of the reactor was raised to 150-160°C under normal pressure in a nitrogen atmosphere. Under these conditions the reaction is continued until the theoretical amount of tertiary-butanol distillate was achieved.

If necessary, a vacuum can be applied to ensure the completion of the reaction. Gel chromatography can be used to identify the reaction completion.

### Example 2 : Preparation and analysis of coating compositions containing the example and comparative polyols

Various clear coating compositions were prepared as detailed in Table 1, below. A C-Michael addition reaction performed at room temperature was employed when utilising example acetoacetate end-capped polyester polyol as described above available acrylate-based oligomers. The coatings were prepared using a 2-component (2K) process. The C-Michael crosslinking achieved within the polymer matrix may be accelerated by the presence of an organic base catalyst like DBU (1,8-diazabicyclo[5.4.0]undec-7-ene.) if desired.

The acetoacetate end-capped polyester polyol and acrylate based oligomer were reacted in a molar ratio of 1: 1, as noted below in Table 1. The two commercially available acrylate based oligomers tested were Photomer^{™} 3016-60G) and Photomer 4335. The resulting coating is therefore a two component (2K) based product but one which is advantageously prepared in the absence of isocyanate. The coating composition was applied on to glass as a substrate; a 100 µm film of the coating composition was applied with the aid of an applicator frame (BYK PA-2030) and subsequently tested for the hardness and chemical resistance. For the Shore A hardness, a 0.6 mm casted thickness was used for the evaluation.

The cured coating properties were evaluated, and the results are given in Table 1 & 2

**Table 1: Clear coat 2-component system in a 1:1 molar ratio**

| End-capped polyol | Coating composition (wt%) | | | | | |
|---|---|---|---|---|---|---|
| Example | 1 | 2 | 3 | 4 | 5 | 6 |
| Pripol 2033 | 44.45 | | | | | |
| Pripol 2043 | | 47.77 | | | | |
| Polyol P2 | | | 45.1 | | | |
| Polyol P3 | | | | 79.8 | | |
| Polyol P1 | | | | | 71.6 | |
| PTMEG | | | | | | 71.63 |
| Photomer 3016-60G | 54.55 | 51.23 | 53.87 | 19.25 | 27.37 | 27.36 |
| Catalyst DBU | 1.00 | 1.00 | 1.00 | 1.00 | 1.00 | 1.00 |

| Coating evaluation | | | | | | |
|---|---|---|---|---|---|---|
| | 1 | 2 | 3 | 4 | 5 | 6 |
| Buchholz hardness Indention resistance | 71 | 91 | 167 | 77 | 40 | 53 |
| Direct impact (cm.kg) | 200 | 200 | 200 | 200 | 200 | 200 |
| Indirect impact (cm.kg) | 200 | 200 | 150 | 200 | 200 | 200 |

| Chemical resistance: 5=undamaged to 0= damaged | | | | | | |
|---|---|---|---|---|---|---|
| Acetone (10s) | 5 | 5 | 5 | 4-5 | 4-5 | 3 |
| Ethyl acetate (10s) | 4 | 4 | 5 | 4 | 3 | 3 |
| NH₄OH (2m) | 5 | 5 | 5 | 5 | 4-5 | 5 |
| Acetic acid (1h) | 4-5 | 4-5 | 5 | 3-4 | 3 | 2-3 |
| 5% NaCl (5h) | 5 | 5 | 5 | 4-5 | 4-5 | 0-1 |

When considering the mechanical and chemical data detailed in Table 1, the C-Michael polymer matrix materials which are formed at room temperature from the acetoacetate end- capped polyols of the present invention in combination with an acrylate oligomer provide a coating that when comparing the coating based on example 2 there is an improved indention hardness over example 1. The higher functionality of the Pripol 2043 used in example 2 gives a higher crosslink density aiding the indention hardness. The polyol 2 used in coating example 3 has a higher functionality which is shown in the higher indention hardness. In addition to this hardness the coating composition Example 3 exhibits still the ability to absorb a direct impact of 200 and an indirect impact of 150 cm.kg. Creating a hard but flexible coating. The high crosslink density of the coating example 3 additionally provides chemical resistance (5= undamaged).

**Table 2: Clear coat 2-component system in a 1:1 molar ratio**

| End-capped polyol | Coating / sealant composition (wt%) | | | | |
|---|---|---|---|---|---|
| Example | 1 | 2 | 3 | 4 | 5 |
| Pripol 2033 | 65.92 | | | | |
| Pripol 2043 | | 74.67 | | | |
| Polyol P2 | | | 66.48 | | |
| Polyol P3 | | | | 90.07 | |
| Polyol P1 | | | | | 85.55 |
| Photomer 4335 | 33.08 | 24.33 | 32.52 | 8.93 | 13.45 |
| Catalyst DBU | 1.00 | 1.00 | 1.00 | 1.00 | 1.00 |

| Coating evaluation | | | | | |
|---|---|---|---|---|---|
| | 1 | 2 | 3 | 4 | 5 |
| Shore A hardness | 76 | 83 | 90 | <10 | 58 |

When considering the mechanical detailed in Table 2, the C-Michael polymer matrix materials which are formed at room temperature from the acetoacetate end-capped polyols of the present invention in combination with an acrylate oligomer provide a coating / sealant that when comparing the coating/sealant based on example 1, 2 and 3 the Shore A hardness is increasing with the increase of functionality of the polyols used in the examples. The higher mol weight, by number average of the polyol P1 and P3 used in coating/sealant compositions 4 and 5 provide lower Shore A hardness.

**Table 3: Adhesive 2-component system in a 1:1 molar ratio**

| End-capped polyol | Adhesive composition (wt%) | | | | | |
|---|---|---|---|---|---|---|
| Example | 1 | 2 | 3 | 4 | 5 | 6 |
| Pripol 2043 | 10 | | | 10 | | |
| Polyol P2 | | 10 | | | 10 | |
| PPG | | | 10 | | | 10 |
| Photomer 4028 | 15 | 15 | 21 | - | - | - |
| Photomer 6210 | - | - | - | 41 | 40 | 8 |
| Catalyst DBU | 0.2 | 0.2 | 0.2 | 0.2 | 0.2 | 0.2 |
| | | | | | | |

| | Adhesive strength (MPa) | | | | | |
|---|---|---|---|---|---|---|
| Substrate | 1 | 2 | 3 | 4 | 5 | 6 |
| PP | 0.7 | 0.7 | 0.4 | 0.5 | 0.7 | 0.4 |
| PA | 0.8 | 1.5 | 0.6 | 0.6 | 1.0 | 0.4 |
| PVC | 4.1^{**)} | 4.2^{**)} | 1.5 | 2.1 | 3.7 | 2.0 |
| GFE^{*)} | 2.8 | 3.9 | 0.9 | 1.2 | 1.9 | 0.6 |
| Alu | 3.4 | 5.8 | 0.8 | 1.4 | 2.6 | 1.1 |
| Steel | 2.4 | 5.9 | 0.6 | 1.5 | 3.5 | 0.9 |

| | | | | | | |
|---|---|---|---|---|---|---|
| ^{*)} Glass filled epoxy resin ^{**)} Substrate failure | | | | | | |

When considering the adhesive strength detailed in Table 3, the C-Michael polymer matrix materials which are formed at room temperature from the acetoacetate end-capped polyols of the present invention in combination with an acrylate oligomer provide an adhesive that when comparing the adhesive formulations based on example 2 is higher in adhesive strength than 1 and 3. The adhesive formulations based on example 5 is higher in adhesive strength than 4 and 6.The adhesive strength given by the higher functionality is independent from the acrylate oligomer.

## Claims

1. An acetoacetate end-capped polyester polyol comprising:
a) at least one dimer fatty residue selected from a dimer fatty acid residue, a dimer fatty diol residue and a dimer fatty diamine residue; and optionally
b) at least one residue of a linear or branched C2 to C36 diacid or diol.

2. An acetoacetate end-capped polyester polyol according to claim 1, wherein the acetoacetate end-cap may be selected from one or more of the following: methyl acetoacetate, ethyl acetoacetate, tert-butyl acetoacetate, isopropyl acetoacetate, isobutyl acetoacetate and ketene derivatives, optionally wherein the acetoacetate end-cap is tert-butyl acetoacetate.

3. An acetoacetate end-capped polyester polyol according to any proceeding claim, comprising at least 10wt% acetoacetate end-cap and/or at most 95wt% acetoacetate end-cap.

4. An acetoacetate end-capped polyester polyol according to any preceding claim, comprising at least 5 wt% of component a) and/or at most 30 wt% of component a).

5. An acetoacetate end-capped polyester polyol according to any preceding claim, wherein said dimer fatty residue is derived from the dimerisation product of C10 to C30 fatty acids.

6. An acetoacetate end-capped polyester polyol according to any preceding claim, comprising at least 0.10wt% of component b) and/or at most 15wt% of component b).

7. An acetoacetate end-capped polyester polyol according to any preceding claim, wherein component b) comprises at least one residue of a linear dicarboxylic acid having a carbon chain in the range from 4 to 12 carbon atoms, optionally wherein component b) comprises one or more of adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, and dodecane dicarboxylic acid.

8. An acetoacetate end-capped polyester polyol according to any preceding claim, wherein component b) comprises at least one residue of a diol having from 2 to 10 carbon atoms, optionally wherein component b) comprises ethylene glycol, diethylene glycol, 1,3-propanediol, 1,4-butanediol, 1,6-hexanediol 1,3-propylene glycol, dipropylene glycol, 1,4-butylene glycol, neopentyl glycol, 3-methyl pentane glycol, 1,2-propylene glycol, 1,4-bis(hydroxymethyl)cyclohexane, 1,4-cyclohexane-dimethanol and/or mixtures thereof.

9. An acetoacetate end-capped polyester polyol according to any preceding claim, wherein component b) comprises at least one residue of a polyol having a hydroxyl function greater than 2, optionally wherein said component b) polyols may include glycerol, pentaerythritol, or trimethylolpropane.

10. A polymer composition comprising an acetoacetate end-capped polyester polyol as claimed in any of claims 1 to 9.

11. A polymer composition according to claim 10, wherein said composition is a polymer resin or a polymer matrix, and/or wherein the dimer fatty residue content of the polymer composition is in the range of from 5 to 50wt%, and/or wherein the polymer composition is substantially free from isocyanate.

12. A polymer composition according to claim 10 or 11, wherein the polymer composition comprises said acetoacetate end-capped polyester polyol and an acrylate, optionally wherein the molar ratio of the acetoacetate end-capped polyester polyol to acrylate is in the range from 1:0.25 to 4.

13. A method of making a polymer composition comprising reacting an acetoacetate end-capped polyester polyol as claimed in any of claims 1 to 9 with an acrylate to form:
(i) a polymer resin; or
(ii) a polymer matrix.

14. Use of an acetoacetate end-capped polyester polyol as claimed in any of claims 1 to 9 to form a polymer composition.

15. A coating composition, adhesive composition, elastomer composition or sealant composition comprising a polymer composition as claimed in any of claims 10 to 11.

## Patentansprüche

1. Mit Acetoacetat endverkapptes Polyesterpolyol, umfassend:
a) mindestens ein Dimerfettrest, ausgewählt aus einem Dimerfettsäurerest, einem Dimerfettdiolrest und einem Dimerfettdiaminrest; und optional
b) mindestens einen Rest einer linearen oder verzweigten C2- bis C36-Disäure oder eines linearen oder verzweigten C2- bis C36-Diols.

2. Mit Acetoacetat endverkapptes Polyesterpolyol nach Anspruch 1, wobei die Acetoacetat-Endgruppe aus einem oder mehreren der Folgenden auswählbar ist: Methylacetoacetat, Ethylacetoacetat, tert-Butylacetoacetat, Isopropylacetoacetat, Isobutylacetoacetat und Ketenderivaten, gegebenenfalls wobei die Acetoacetat-Endgruppe tert-Butylacetoacetat ist.

3. Mit Acetoacetat endverkapptes Polyesterpolyol nach einem der vorstehenden Ansprüche, umfassend mindestens 10 Gew.-% Acetoacetat-Endgruppe und/oder höchstens 95 Gew.-% Acetoacetat-Endgruppe.

4. Mit Acetoacetat endverkapptes Polyesterpolyol nach einem der vorstehenden Ansprüche, umfassend mindestens 5 Gew.-% der Komponente a) und/oder höchstens 30 Gew.-% der Komponente a).

5. Mit Acetoacetat endverkapptes Polyesterpolyol nach einem der vorstehenden Ansprüche, wobei der Dimerfettsäurerest von dem Dimerisierungsprodukt von C10- bis C30-Fettsäuren abgeleitet ist.

6. Mit Acetoacetat endverkapptes Polyesterpolyol nach einem der vorstehenden Ansprüche, umfassend mindestens 0,10 Gew.-% der Komponente b) und/oder höchstens 15 Gew.-% der Komponente b).

7. Mit Acetoacetat endverkapptes Polyesterpolyol nach einem der vorstehenden Ansprüche, wobei Komponente b) mindestens einen Rest einer linearen Dicarbonsäure mit einer Kohlenstoffkette im Bereich von 4 bis 12 Kohlenstoffatomen umfasst, wobei Komponente b) optional eine oder mehrere von Adipinsäure, glutarischer Säure, Bernsteinsäure, Pimelinsäure, Suberinsäure, Azelainsäure, Sebacinsäure, Heptandicarbonsäure, Octandicarbonsäure, Nonandicarbonsäure, Decandicarbonsäure, Undecandicarbonsäure und Dodecandicarbonsäure umfasst.

8. Mit Acetoacetat endverkapptes Polyesterpolyol nach einem der vorstehenden Ansprüche, wobei Komponente b) mindestens einen Rest eines Diols mit 2 bis 10 Kohlenstoffatomen umfasst, wobei Komponente b) optional Ethylenglykol, Diethylenglykol, 1,3-Propandiol, 1,4-Butandiol, 1,6-Hexandiol, 1,3-Propylenglykol, Dipropylenglykol, 1,4-Butylenglykol, Neopentylglykol, 3-Methylpentanglykol, 1,2-Propylenglykol, 1,4-Bis(hydroxymethyl)cyclohexan, 1,4-Cyclohexandimethanol und/oder Mischungen davon umfasst.

9. Mit Acetoacetat endverkapptes Polyesterpolyol nach einem der vorstehenden Ansprüche, wobei Komponente b) mindestens einen Rest eines Polyols mit einer Hydroxylfunktion größer als 2 umfasst, wobei optional die Polyole der Komponente b) Glycerin, Pentaerythrit oder Trimethylolpropan einschließen können.

10. Polymerzusammensetzung, umfassend ein mit Acetoacetat endverkapptes Polyesterpolyol nach einem der Ansprüche 1 bis 9.

11. Polymerzusammensetzung nach Anspruch 10, wobei die Zusammensetzung ein Polymerharz oder eine Polymermatrix ist, und/oder wobei der Gehalt an Dimerfettresten der Polymerzusammensetzung im Bereich von 5 bis 50 Gew.-% liegt, und/oder wobei die Polymerzusammensetzung im Wesentlichen frei von Isocyanat ist.

12. Polymerzusammensetzung nach Anspruch 10 oder 11, wobei die Polymerzusammensetzung das mit Acetoacetat endverkappte Polyesterpolyol und ein Acrylat umfasst, optional wobei das Molverhältnis des mit Acetoacetat endverkappten Polyesterpolyols zu Acrylat im Bereich von 1 : 0,25 bis 4 liegt.

13. Verfahren zur Herstellung einer Polymerzusammensetzung, umfassend das Umsetzen eines mit Acetoacetat endverkappten Polyesterpolyols nach einem der Ansprüche 1 bis 9 mit einem Acrylat zum Bilden von:
(i) einem Polymerharz; oder
(ii) einer Polymermatrix.

14. Verwendung eines mit Acetoacetat endverkappten Polyesterpolyols nach einem der Ansprüche 1 bis 9 zum Bilden einer Polymerzusammensetzung.

15. Beschichtungszusammensetzung, Klebstoffzusammensetzung, Elastomerzusammensetzung oder Dichtungsmittelzusammensetzung, umfassend eine Polymerzusammensetzung nach einem der Ansprüche 10 bis 11.

## Revendications

1. Polyol de polyester à coiffe d'extrémité acétoacétate comprenant :
a) au moins un résidu gras dimère choisi parmi un résidu d'acide gras dimère, un résidu de diol gras dimère et un résidu de diamine grasse dimère ; et éventuellement
b) au moins un résidu d'un diacide ou diol linéaire ou ramifié en C2 à C36.

2. Polyol de polyester à coiffe d'extrémité acétoacétate selon la revendication 1, dans lequel la coiffe d'extrémité acétoacétate peut être choisie parmi un ou plusieurs des éléments suivants : acétoacétate de méthyle, acétoacétate d'éthyle, acétoacétate de tert-butyle, acétoacétate d'isopropyle, acétoacétate de isobutyle et dérivés de cétène, éventuellement, dans lequel la coiffe d'extrémité acétoacétate est de l'acétoacétate de tert-butyle.

3. Polyol de polyester à coiffe d'extrémité acétoacétate selon l'une quelconque revendication précédente, comprenant au moins 10 % en poids de coiffe d'extrémité acétoacétate et/ou au plus 95 % en poids de coiffe d'extrémité acétoacétate.

4. Polyol de polyester à coiffe d'extrémité acétoacétate selon l'une quelconque revendication précédente, comprenant au moins 5 % en poids du composant a) et/ou au plus 30 % en poids du composant a).

5. Polyol de polyester à coiffe d'extrémité acétoacétate selon l'une quelconque revendication précédente, dans lequel ledit résidu gras dimère est dérivé du produit de dimérisation d'acides gras en C10 à C30.

6. Polyol de polyester à coiffe d'extrémité acétoacétate selon l'une quelconque revendication précédente, comprenant au moins 0,10 % en poids de composant b) et/ou au plus 15 % en poids de composant b).

7. Polyol de polyester à coiffe d'extrémité acétoacétate selon l'une quelconque revendication précédente, dans lequel le composant b) comprend au moins un résidu d'un acide dicarboxylique linéaire ayant une chaîne carbonée comprise dans la plage allant de 4 à 12 atomes de carbone, éventuellement dans lequel le composant b) comprend un ou plusieurs parmi acide adipique, acide glutarique, acide succinique, acide pimélique, acide subérique, acide azélaïque, acide sébacique, acide heptanedicarboxylique, acide octanedicarboxylique, acide nonanedicarboxylique, acide décanedicarboxylique, acide undécanedicarboxylique et acide dodécanedicarboxylique.

8. Polyol de polyester à coiffe d'extrémité acétoacétate selon l'une quelconque revendication précédente, dans lequel le composant b) comprend au moins un résidu d'un diol ayant de 2 à 10 atomes de carbone, éventuellement dans lequel le composant b) comprend éthylène glycol, diéthylène glycol, 1,3-propanediol, 1,4-butanediol, 1,6-hexanediol, 1,3-propylène glycol, dipropylène glycol, 1,4-butylène glycol, néopentyl glycol, 3-méthylpentane glycol, 1,2-propylène glycol, 1,4-bis(hydroxyméthyl)cyclohexane, 1,4-cyclohexane-diméthanol et/ou des mélanges de ceux-ci.

9. Polyol de polyester à coiffe d'extrémité acétoacétate selon l'une quelconque revendication précédente, dans lequel le composant b) comprend au moins un résidu d'un polyol ayant une fonction hydroxyle supérieure à 2, éventuellement dans lequel lesdits polyols de composant b) peuvent comporter du glycérol, pentaérythritol ou triméthylolpropane.

10. Composition polymère comprenant un polyol de polyester à coiffe d'extrémité acétoacétate selon l'une quelconque des revendications 1 à 9.

11. Composition polymère selon la revendication 10, dans laquelle ladite composition est une résine polymère ou une matrice polymère, et/ou dans laquelle la teneur en résidus gras dimères de la composition polymère se situe dans la plage allant de 5 à 50 % en poids, et/ou dans laquelle la composition polymère est sensiblement exempte d'isocyanate.

12. Composition polymère selon la revendication 10 ou 11, dans laquelle la composition polymère comprend ledit polyol de polyester à coiffe d'extrémité acétoacétate et un acrylate, éventuellement dans laquelle le rapport molaire du polyol de polyester à coiffe d'extrémité acétoacétate à l'acrylate est compris dans la plage allant de 1:0,25 à 4.

13. Procédé de fabrication d'une composition polymère comprenant la mise en réaction d'un polyol de polyester à coiffe d'extrémité acétoacétate selon l'une quelconque des revendications 1 à 9 avec un acrylate pour former :
(i) une résine polymère ; ou
(ii) une matrice polymère.

14. Utilisation d'un polyol de polyester à coiffe d'extrémité acétoacétate selon l'une quelconque des revendications 1 à 9 pour former une composition polymère.

15. Composition de revêtement, composition adhésive, composition élastomère ou composition d'étanchéité comprenant une composition polymère selon l'une quelconque des revendications 10 à 11.
